# EUROPEAN PATENT APPLICATION

(11) **EP 4 576 401 A1**
(43) Date of publication of application: **25.06.2025**
(21) Application number: 23854343.3
(22) Date of filing: 11.08.2023
(51) Int. Cl.: H01M 50/528, H01M 50/533, H01M 50/547

(54) **SINGLE-CELL BATTERY, BATTERY PACK, AND VEHICLE**

(30) Priority: 19.08.2022 CN 202211003310
(71) Applicant: BYD Company Limited, Shenzhen, Guangdong 518118 (CN)
(72) Inventor: ZHENG, Weixin, Shenzhen, Guangdong 518118 (CN); WU, Yanfeng, Shenzhen, Guangdong 518118 (CN); WANG, Xiao, Shenzhen, Guangdong 518118 (CN); ZHANG, Shun, Shenzhen, Guangdong 518118 (CN); YI, Ning, Shenzhen, Guangdong 518118 (CN)
(74) Representative: Mathys & Squire
(86) International application number: PCT/CN2023/112502
(87) International publication number: WO 2024/037442

(57) **Abstract**

A single-cell battery, a battery pack, and a vehicle. The single-cell battery comprises a housing, an electrode plate, a tab, a current collector, and a terminal pole. An accommodation space is defined in the housing. The electrode plate is located in the accommodation space, and at least has a first surface and a second surface. The tab is disposed at the electrode plate, and comprises a first section and a second section in connection with each other. The first section extends out of the electrode plate from the first surface, the current collector is disposed in the first section, and the second section extends out of the electrode plate from the second surface. The terminal pole is disposed at the current collector and extends out of the housing.

## Description

### CROSS-REFERENCE TO RELATED APLICATIONS

The present disclosure is proposed on the basis of and claims priority to Chinese Patent Application No. 202211003310.X filed on Friday, August 19, 2022, the disclosure of which is incorporated herein by reference in its entirety.

### FIELD

The present disclosure relates to the technical field of batteries, and specifically to a battery cell, a battery pack having the battery cell, and a vehicle having the battery pack.

### BACKGROUND

A tab of a battery in related art is a traditional tab, which is a structure disposed at a wide-side end portion of an electrode plate. The length of a long-side end portion of the tab is less than the length of a wide-side end portion thereof, which limits the area. This results in small current flowing-through areas of the tab and a terminal pole, leading to a restricted fast-charging ability of the battery.

### SUMMARY

An object of the present disclosure is to provide a battery cell, to solve the technical problem of limited fast-charging ability of a battery having a traditional tab in the related art.

According to a first aspect of the present disclosure, a battery cell is provided. The battery cell includes: a housing, where an accommodation space is defined in the housing; an electrode plate, where the electrode plate is located in the accommodation space, and at least has a first surface and a second surface; a tab and a current collector, where the tab is disposed at the electrode plate and includes a first section and a second section in connection with each other, the first section extends out of the electrode plate from the first surface, the current collector is disposed in the first section, and the second section extends out of the electrode plate from the second surface, to transfer a current between the second section and the second surface; a terminal pole, where the terminal pole is disposed at the current collector and extends out of the housing.

In the present disclosure, at least one terminal pole is a sheet-like structure.

In the present disclosure, the electrode plate has edges extending along a first direction, a second direction, and a third direction. The first direction and the second direction define a first plane, the first direction and the third direction define a second plane, and the second direction and the third direction define a third plane. The first surface and the second surface are connected, the first surface is parallel to the third plane, and the second surface is parallel to the second plane.

In the present disclosure, the surface area of the second surface is larger than the surface area of the first surface.

In the present disclosure, the terminal pole includes a positive electrode terminal pole and a negative electrode terminal pole. The second section corresponding to the positive electrode terminal pole is located at one end portion of the electrode plate in the second direction. The second section corresponding to the negative electrode terminal pole is located at the other end portion of the electrode plate in the second direction.

In the present disclosure, the terminal pole includes a positive electrode terminal pole and a negative electrode terminal pole. The second section corresponding to the positive electrode terminal pole and the second section corresponding to the negative electrode terminal pole are located at the same end portion of the electrode plate in the second direction, and spaced apart in the first direction.

In the present disclosure, the positive electrode terminal pole and the negative electrode terminal pole are located at the same end portion of the electrode plate in the first direction.

In the present disclosure, the positive electrode terminal pole is located at one end portion of the electrode plate in the first direction, and the negative electrode terminal pole is located at the other end portion of the electrode plate in the first direction.

In the present disclosure, the battery cell includes an electrode plate assembly, where the electrode plate assembly includes multiple stacked electrode plates, and the electrode plates include a positive electrode plate and a negative electrode plate; a tab assembly, where the tab assembly includes a positive electrode tab and a negative electrode tab, the positive electrode tab is electrically connected to the positive electrode plate, and the negative electrode tab is electrically connected to the negative electrode plate; a current collector assembly, where the current collector assembly includes a positive electrode current collector and a negative electrode current collector, the positive electrode current collector is connected to the positive electrode tab, and the negative electrode current collector is connected to the negative electrode tab; and a terminal pole assembly, where the terminal pole assembly includes two terminal poles, and the two terminal poles are respectively a positive electrode terminal pole connected to the positive electrode current collector and a negative electrode terminal pole connected to the negative electrode current collector.

In the present disclosure, multiple electrode plate assemblies are disposed, and each electrode plate assembly is disposed with one tab assembly, one current collector assembly, and one terminal pole assembly.

In the present disclosure, multiple terminal pole assemblies, tab assemblies, and current collector assemblies are disposed, and the multiple terminal pole assemblies are fitted to one electrode plate assembly.

According to a second aspect of the present disclosure, a battery pack is further provided. The battery pack includes: a battery cell, where the battery cell is any one of the above battery cells; and a heat transport member, where the heat transport member can transport the heat of the battery cell close to the first surface to the outside of the housing corresponding to the second surface.

In the present disclosure, the heat transport member includes: a thermally conductive member, where the thermally conductive member is disposed on the housing and thermally conductively connected to the terminal pole, and the thermally conductive member extends towards a position on the housing corresponding to the second surface.

In the present disclosure, multiple battery cells are disposed, and the thermally conductive member is respectively thermally conductively connected to the terminal poles of two adjacent battery cells.

In the present disclosure, the battery pack further includes: a heat dissipator, where at least a portion of the heat dissipator is arranged facing the first surface and can exchange heat with the terminal pole.

In the present disclosure, the heat dissipator includes at least one tubular member, where the tubular member internally has a first fluid channel for a cooling fluid to flow through, and a portion of the tubular member forms at least a portion of the heat transport member.

In the present disclosure, the battery pack further includes: a cooler, where the cooler is thermally conductively connected to the housing corresponding to the second surface.

In the present disclosure, the cooler internally has a second fluid channel for a cooling fluid to flow through, and the cooler is thermally conductively connected to the heat transport member.

In the present disclosure, two coolers are disposed, and the battery cells are located between the two coolers.

According to a second aspect of the present disclosure, a vehicle is provided, which includes a battery pack according to any one of the above embodiments.

According to an embodiment of the present disclosure, the battery cell mainly includes a housing, an electrode plate, a tab, a current collector, and a terminal pole. The tab including a first section and a second section is a bent member, where one portion of the tab extends along the first direction of the electrode plate, to increase the contact area with the electrode plate, and the other portion extends along the second direction of the electrode plate to connect to the corresponding current collector. Specifically, the tab is bent to form the first section, by which the current is led out from a side surface of the electrode plate; and the tab is bent to form the second section, by which the tab is connected to the current collector. In this manner, the current collector and the first section are disposed in two directions of the electrode plate assembly, to control the direction of the current. In the battery cell of the present disclosure, by using a structure where the tab is top-out and the terminal pole is side-out, the current conducting path is shortened, the current flowing capacity at a lead-out position of the current collector of the battery cell is enhanced, and the fast-charging ability of the battery cell is improved.

Other features and advantages of the present disclosure will become apparent from the following detailed description of exemplary embodiments of the present disclosure with reference to the drawings.

### BRIEF DESCRIPTION OF THE DRAWINGS

Accompanying drawings that are incorporated into and constitute a part of this specification show embodiments of the present disclosure, and are used together with the specification to explain the principle of the present disclosure.
FIG. 1 is a partially exploded view of a battery cell according to Embodiment 1 of the present disclosure;
FIG. 2 is a schematic view showing the internal structure of the battery cell according to Embodiment 1 of the present disclosure;
FIG. 3 is a schematic view showing the direction of current flow in the battery cell according to Embodiment 1 of the present disclosure;
FIG. 4 is a partially exploded view of a battery cell according to Embodiment 2 of the present disclosure;
FIG. 5 is a schematic view showing the internal structure of the battery cell according to Embodiment 2 of the present disclosure;
FIG. 6 is a partially exploded view of a battery cell according to Embodiment 2 of the present disclosure;
FIG. 7 is a schematic view showing the direction of current flow in the battery cell according to Embodiment 2 of the present disclosure;
FIG. 8 is a partially exploded view of a battery cell according to Embodiment 3 of the present disclosure;
FIG. 9 is a schematic view showing the internal structure of the battery cell according to Embodiment 3 of the present disclosure;
FIG. 10 is a schematic view showing the direction of current flow in the battery cell according to Embodiment 3 of the present disclosure;
FIG. 11 is a partially exploded view of a battery cell according to Embodiment 4 of the present disclosure;
FIG. 12 is a schematic view showing the internal structure of the battery cell according to Embodiment 4 of the present disclosure;
FIG. 13 is a schematic view showing the direction of current flow in the battery cell according to Embodiment 4 of the present disclosure;
FIG. 14 is a schematic view showing the assembly of a terminal pole and a current collector according to an embodiment of the present disclosure;
FIG. 15 is a schematic view showing the assembly of a battery cell and a heat dissipator according to an embodiment of the present disclosure;
FIG. 16 is a partially exploded view of a battery pack according to an embodiment of the present disclosure;
FIG. 17 is a schematic view showing the assembly of a battery cell and an explosion-proof valve according to an embodiment of the present disclosure;
FIG. 18 is a schematic structural view of a connecting member according to an embodiment of the present disclosure, viewed from one perspective;
FIG. 19 is a schematic structural view of a connecting member according to an embodiment of the present disclosure, viewed from another perspective;
FIG. 20 is a schematic view showing a second thermally conductive member fitting with two battery cells according to an embodiment of the present disclosure; and
FIG. 21 is an enlarged view of an encircled region A in FIG. 20.

List of reference numerals:
1000 battery pack;
1 anti-explosion valve; 11 gas exhaust direction;
2 battery cell; 21 housing; 211 side plate; 212 cover plate;
20 electrode plate; 221 electrode plate assembly; 2211 third surface; 2212 second surface; 2213 first surface; 222 current collector;
31 positive electrode terminal pole; 32 negative electrode terminal pole; 33 terminal pole; 331 first connecting segment; 332 second connecting segment;
40 heat transport member; 401 thermally conductive member; 402 cooler; 41 first cooler; 42 second cooler; 43 first thermally conductive member; 44 second thermally conductive member; 45 heat dissipator; 46 connecting member; 461 first connecting portion; 462 second connecting portion; 463 third connecting portion; 464 fourth connecting portion;
50 tab; 51 positive electrode tab; 52 negative electrode tab; 532 first section; 531 second section.

### DETAILED DESCRIPTION

Various exemplary embodiments of the present disclosure are now be described in detail with reference to the accompanying drawings. It is to be noted that unless otherwise specifically specified, the relative arrangement, numerical expressions, and numerical values of components and steps described in the embodiments do not limit the scope of the present disclosure.

The following descriptions of at least one exemplary embodiment are merely illustrative, and do not constitute any limitation on the present disclosure and application or use thereof in any way.

Technologies, methods, and devices known to those of ordinary skill in related art may not be discussed in detail, but where appropriate, the technologies, the methods, and the devices should be considered as a part of the specification.

In all examples shown and discussed herein, any specific value should be construed to be merely exemplary, and not as limitations. Therefore, other examples of exemplary embodiments may have different values.

It should be noted that similar reference numerals and letters indicate similar items in the following drawings. Therefore, once an item is defined in a drawing, it has no need to be discussed further in the following drawings.

A battery cell 2 according to an embodiment of the present disclosure will be described below with reference to the accompanying drawings.

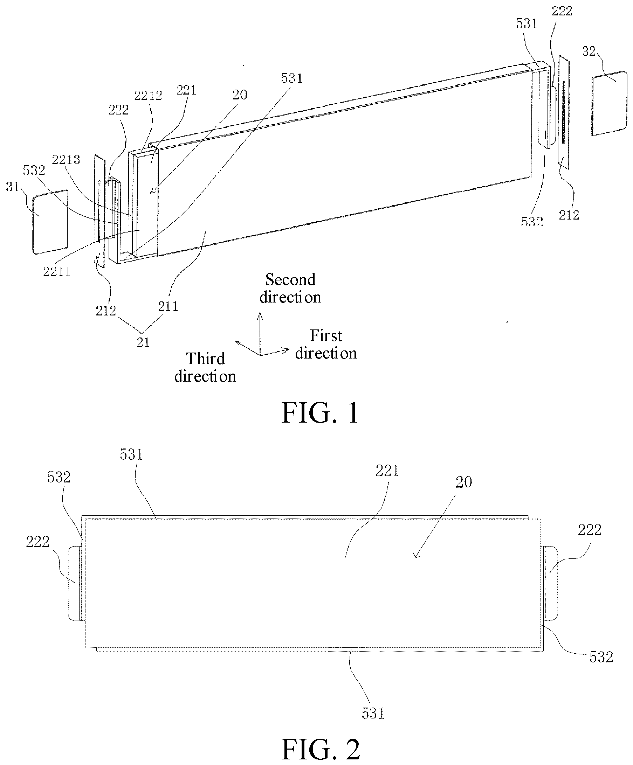

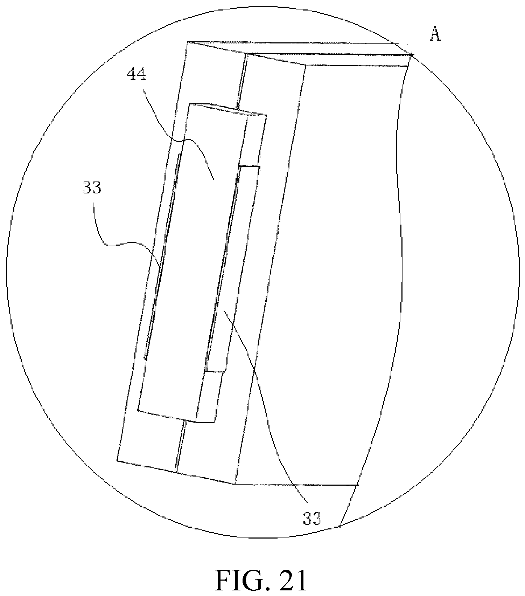

As shown in FIGs. 1 to 21, the battery cell 2 according to an embodiment of the present disclosure includes a housing 21, an electrode plate 20, a tab 50, a current collector 222, and terminal pole 33.

Specifically, an accommodation space is defined in the housing 21. The electrode plate 20 is located in the accommodation space, and the electrode plate 20 at least has a first surface 2213 and a second surface 2212. The tab 50 is disposed at the electrode plate 20, and the tab 50 includes a first section 532 and a second section 531 in connection with each other. The first section 532 extends out of the electrode plate 20 from the first surface 2213, the current collector 222 is disposed in the first section 532, the second section 531 extends out of the electrode plate 20 from the second surface 2212, to transfer a current between the second section 531 and the second surface 2212, and the terminal pole is disposed at the current collector 222 and extends out of the housing 21.

In other words, the battery cell 2 according to the embodiment of the present disclosure mainly includes the housing 21, the electrode plate 20, the tab 50, the current collector 222, and the terminal pole 33. The housing 21 has an accommodation space. The accommodation space has an accommodating function, and is configured to accommodate and install the electrode plate 20, etc.

The outer surface of the electrode plate 20 at least includes the first surface 2213 and the second surface 2212.The tab 50 is disposed at an edge of the electrode plate 20. Specifically, the tab 50 includes the first section 532 and the second section 531 in connection with each other. The first section 532 is located on the first surface 2213, and extends out of the electrode plate 20 from the first surface 2213. The second section 531 is located on the second surface 2212, and extends out of the electrode plate 20 from the second surface 2212. The first section 532 is connected to the current collector 222, and the current can be transferred between the second section 531 and the second surface 2212. It is to be understood that the current transfer direction is not limited here, and may be from the second surface 2212 to the second section 531, or from the second section 531 to the second surface 2212. In addition, the current may flow from the second section 531 to the first section 532, or from the first section 532 to the second section 531, which is not limited herein.

Therefore, the battery cell 2 according to the embodiment of the present disclosure mainly includes the housing 21, the electrode plate 20, the tab 50, the current collector 222, and the terminal pole. The tab 50 including the second section 531 and the first section 532 is a bent member, where one portion of the tab 50 extends along a first direction of the electrode plate 20, to increase the contact area with the electrode plate 20, and the other portion extends along a second direction of the electrode plate 20 to connect to the corresponding current collector 222. Specifically, the tab 50 is bent to form the second section 531, by which the current is led out from a side surface of the electrode plate 20; and the tab 50 is bent to form the first section 532, by which the tab 50 is connected to the current collector 222. In this manner, the current collector 222 and the second section 531 are disposed in two directions of the electrode plate assembly 221, to control the direction of the current. In the battery cell 2 of the present disclosure, by using a structure where the tab 50 is top-out and the terminal pole 33 is side-out, the current conducting path is shortened, the current flowing capacity at a lead-out position of the current collector 222 of the battery cell 2 is enhanced, and the fast-charging ability of the battery cell 2 is improved. The terminal pole 33 being side-out means that the terminal pole 33 is led out from an end portion of the electrode plate in the first direction, and the tab 50 being top-out means that one portion of the tab 50 is disposed at an end portion of the electrode plate 20 in the second direction.

It is to be understood that since one battery cell 2 may have multiple electrode plates 20, for ease of description, one battery cell 2 may be defined to have an electrode plate assembly 221, a tab assembly, a current collector assembly, and a terminal pole assembly. The electrode plate assembly 221 includes multiple stacked electrode plates 20, and the electrode plates 20 may include a positive electrode plate and a negative electrode plate. For example, the electrode plate assembly 221 includes multiple repeat structures of stacked positive electrode plate-separator-negative electrode plate. The tab assembly includes multiple tabs, and the tab may be a positive electrode tab 51 or a negative electrode tab 52. For example, two tabs 50 are disposed, which includes a positive electrode tab 51 and a negative electrode tab 52. The positive electrode tab 51 is electrically connected to the positive electrode plate, and the negative electrode tab 52 is electrically connected to the negative electrode plate. The current collector assembly includes multiple current collectors 222, and the multiple current collectors 222 include a positive electrode current collector and a negative electrode current collector. The positive electrode current collector is connected to the positive electrode tab 51, and the negative electrode current collector is connected to the negative electrode tab 52. The terminal pole assembly extends out of the accommodation space, and the terminal pole assembly includes two terminal poles 33. The two terminal poles 33 are respectively a positive electrode terminal pole 31 connected to the positive electrode current collector and a negative electrode terminal pole 32 connected to the negative electrode current collector, to achieve the side out of the terminal pole 33.

Optionally, at least one of the multiple tabs include a first section 532 and a second section 531 in connection with each other. That is, in one tab assembly, maybe only the positive electrode tab 51 includes the first section 532 and the second section 531, only the negative electrode tab 52 includes the first section 532 and the second section 531, or both the positive electrode tab 51 and the negative electrode tab 52 include the first section 532 and the second section 531, which is not limited herein.

According to an embodiment of the present disclosure, at least one terminal pole 33 is a sheet-like structure. The use of a sheet-like terminal pole 33 can not only increase the area of the terminal pole 33, but also the increase the current flowing-through area of the current collector 222, which promotes the fast charging.

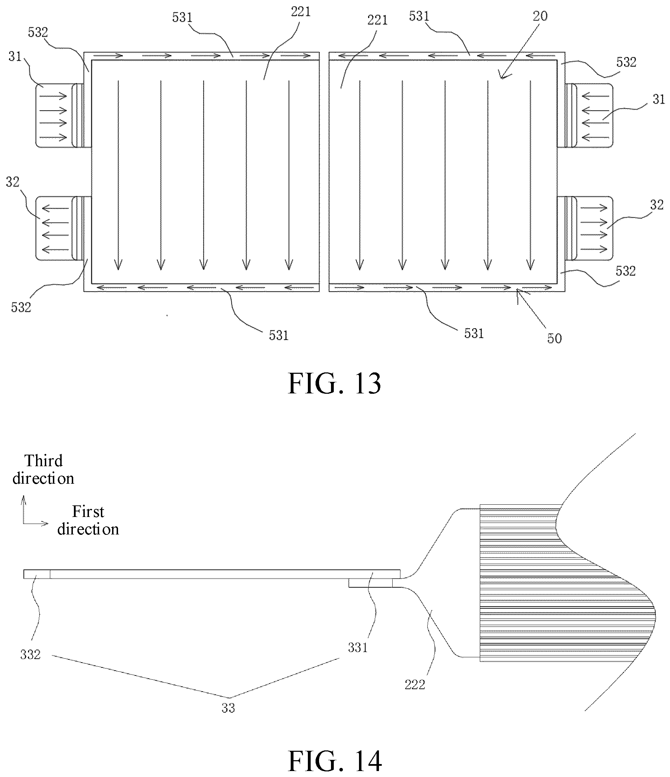

Optionally, as shown in FIG. 14, at least one terminal pole 33 includes a first connecting segment 331 and a second connecting segment 332. The first connecting segment 331 is configured to connect to the current collector 222, the second connecting segment 332 is connected to the first connecting segment 331, and the second connecting segment 332 is configured to connect to an external electric device. The first connecting segment 331 and/or the second connecting segment 332 is/are a sheet-like structure.

In other words, the terminal pole 33 mainly includes the first connecting segment 331 and the second connecting segment 332, where the first connecting segment 331 and the second connecting segment 332 are connected, and the first connecting segment 331 can be configured to connect to the current collector 222, for example, the positive electrode current collector or the negative electrode current collector, It should be noted that the tab 50 of the present disclosure may converge the positive or negative electrode foil, the current collector 222 may be a structure formed after the tab 50 is welded, and the current collector 222 and the tab 50 may be two different states of the same material at this time. It is to be understood that whether the tab 50 and the current collector 222 are arranged separately, or the tab 50 and the current collector 222 have an integral structure, which are all embraced in the scope of protection of the present disclosure.

Specifically, a first end of the second connecting segment 332 is connected to the first connecting segment 331, and a second end of the second connecting segment 332 is configured to connect to an external electric device. For example, the second connecting segment 332 is located on the left side of the first connecting segment 331. A right end of the first connecting segment 331 may be connected to the positive electrode current collector or the negative electrode current collector, a left end of the first connecting segment 331 may be connected to a right end of the second connecting segment 332, and a left end of the second connecting segment 332 may be connected to an external electric device.

It is to be understood that at least one of the first connecting segment 331 and the second connecting segment 332 is a sheet-like structure That is, the terminal pole 33 includes, but is not limited to, the following cases: Case 1: only the first connecting segment 331 is a sheet-like structure; Case 2: only the second connecting segment 332 is a sheet-like structure; and Case 3: both the first connecting segment 331 and the second connecting segment 332 are a sheet-like structure.

The traditional terminal pole in related art is a cylindrical structure, and the traditional terminal pole is disposed at an end portion of a battery core. The diameter of the cylindrical structure needs to be smaller than the thickness of the battery core. Since the surface area of the cylindrical structure is related to the diameter, the surface area of the cylindrical structure is small. In contrast, at least a portion of the terminal pole 33 of this embodiment has a sheet-like structure. The sheet-like structure has a small thickness, and the dimensions of the sheet-like structure in multiple directions may be different from each other. For example, even if the thickness of the sheet-like structure is smaller than that of the battery core, the sheet-like structure can also increase the total area of the terminal pole 33 by extending the dimensions in other directions. For example, when a thickness direction of the sheet-like structure is a front-rear direction, the dimension of the sheet-like structure in a length direction and a width direction may be extended. When at least the first connecting segment 331 is a sheet-like structure, the area of the terminal pole 33 is increased, and the current flowing-through area of the current collector 222 is increased. By increasing the area of the terminal pole 33, the heat dissipation effect can be improved, and by increasing the current flowing-through area, the degree of heat generation can be reduced, to solve the technical problem of limited fast-charging ability of the battery with a traditional terminal pole 33 in related art.

In this embodiment, the terminal pole 33 mainly includes the first connecting segment 331 and the second connecting segment 332, where the first connecting segment 331 and/or the second connecting segment 332 is/are a sheet-like structure, to increase the area. When the first connecting segment 331 is a sheet-like structure, the current flowing-through area of the current collector 222 can be further increased. By increasing the area of the terminal pole 33, the rapid heat dissipation of the terminal pole 33 is facilitated, and by increasing the current flowing-through area, the heat generated is reduced, to improve the charging efficiency of the battery cell 2, thus realizing fast charging.

According to an embodiment of the present disclosure, at least one terminal pole 33 is an integrally formed member. That is, a terminal pole 33 prepared by an integral forming process, for example, stamping or the like, includes both the first connecting segment 331 and the second connecting segment 332. In this embodiment, by using an integrally formed terminal pole 33, the processing and production are facilitated, and the step of connecting the first connecting segment 331 and the second connecting segment 332 can be omitted.

In some specific embodiments of the present disclosure, at least one terminal pole 33 is a rectangular member. That is, the first connecting segment 331 and the second connecting segment 332 may be combined to form a rectangular member that is a plate-shaped member. That is, the first connecting segment 331 and the second connecting segment 332 may extend along the same plane. For example, the first connecting segment 331 is located on the left side of the second connecting segment 332, and the first connecting segment 331 and the second connecting segment 332 extend along the horizontal direction, respectively, and located in the same horizontal plane. In this embodiment, by using a terminal pole 33 with a rectangular structure, the connection of the terminal pole 33 with the current collector 222 and an external electrical device is facilitated. For example, one side surface of the rectangular member is connected to the current collector 222, to ensure a large enough current flowing-through area. Additionally, by using a rectangular member, the area of the terminal pole 33 and the current flowing-through area of the current collector 222 are both increased, to further improve the fast-charging ability of the battery cell 2.

Additionally, as shown in FIG. 14, when the terminal pole 33 is a rectangular member, the distance between the two side surfaces of the terminal pole 33 in the thickness direction is uniform. For example, the terminal pole 33 extends in the horizontal direction. For multiple locations on the terminal pole 33, the distance between the upper surface and the lower surface of the terminal pole 33 is the same. In this embodiment, the processing efficiency can be improved by using a sheet-like terminal pole 33 with uniform thickness.

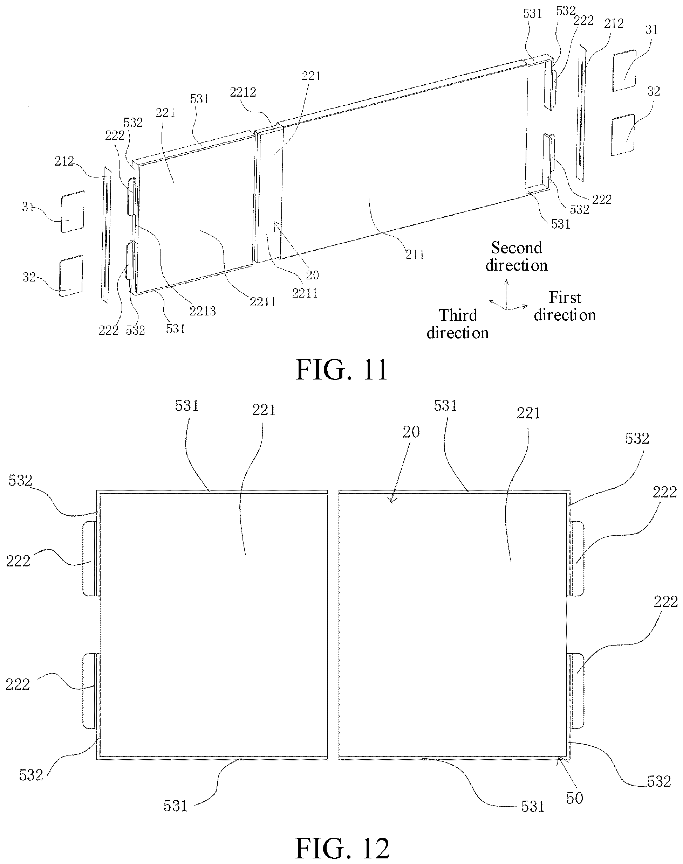

In some specific embodiments of the present disclosure, as shown in FIGs. 1 and 11, the electrode plate 20 has edges extending along a first direction, a second direction, and a third direction. The first direction and the second direction define a first plane, the first direction and the third direction define a second plane, and the second direction and the third direction define a third plane. The first surface 2213 is connected to the second surface 2212, the first surface 2213 is parallel to the third plane, and the second surface 2212 is parallel to the second plane. Because the first section 532 extends out from the first surface 2213 and the second section 531 extends out from the second surface 2212, the first section 532 is located at an end portion of the electrode plate assembly 221 in the first direction and can be insulated from the electrode plate assembly 221. The second section 531 is located at an end portion of the electrode plate assembly 221 in the second direction and can be electrically connected to the electrode plate 20.

Description is made by way of example where the positive electrode tab 51 includes the second section 531 and the first section 532. A length direction of the electrode plate 20 is defined as the first direction, and a height direction of the electrode plate is defined as the second direction. The first direction extends in the horizontal direction, and the second direction extends in the up-down direction. The second section 531 is located above or below the electrode plate assembly 221, and the first section 532 is located on the left or right side of the electrode plate assembly 221, to realize the top out of the tab 50. The current flowing-through area of the tab 50 can also be increased by the top-out structure of the tab 50. For example, an upper end of the positive electrode plate is connected with the second section 531, a left end of the second section 531 is connected to an upper end of the first section 532, and a lower end of the first section 532 is connected to the positive electrode current collector at the left end of the positive electrode plate.

Further, the second section 531 and/or the first section 532 is/are a sheet-like structure. The sheet-like structure has a large surface and a small surface, where the area of the large surface is larger than that of the small surface. The use of a sheet-like structure can facilitate the bending of the tab 50 and the installation and positioning of the tab 50. It also to facilitate the existence of a flat large surface of large area, so as to connect to multiple electrode plates 20.

It is to be understood that when the terminal pole 33 is located at the end portion of the electrode plate assembly 221 in the first direction, an explosion-proof valve 1 can be designed to locate at an end portion of the electrode plate assembly 221 in the second direction, or at an end portion in the third direction, where the third direction can be different from the first direction and the second direction. For example, any two of the first direction, the second direction, and the third direction are perpendicular to each other, the first direction extends in the left-right direction, the second direction extends in the up-down direction, and the third direction extends in the front-rear direction. In this embodiment, by arranging the explosion-proof valve 1 at the end portion of the electrode plate assembly 221 in the second direction, more space can be reserved for the sheet-like terminal pole 33 of the present disclosure, thereby further increasing the area of the terminal pole 33. Additionally, the size of the explosion-proof valve 1 can be increased and the number of the explosion-proof valve 1 can be increased according to the space of the electrode plate assembly 221 in the second direction and the third direction, to improve the thermal safety of the battery pack 1000.

According to an embodiment of the present disclosure, the length direction of the terminal pole 33 extends along the second direction, and the width direction of the terminal pole 33 extends along the first direction. For example, the sheet-like terminal pole 33 extends approximately in the left-right direction, the terminal pole assembly also extends approximately in the left-right direction, and they generally have a parallel structure. In this embodiment, by defining the extending direction of the terminal pole 33, the processing and assembly of the terminal pole 33 are facilitated, and the heat dissipation of the sheet-like terminal pole 33 is promoted.

According to an embodiment of the present disclosure, as shown in FIGs. 1, 4, 8 and 11, the outer surface of the electrode plate 20 includes two third surfaces 2211, two second surfaces 2212, and two first surfaces 2213. The two third surfaces 2211 are spaced apart in the third direction. The length direction of each third surface 2211 extends along the first direction, and the height direction of each third surface 2211 extends along the second direction. The two second surfaces 2212 are spaced apart in the second direction. Two ends of each second surface 2212 in the third direction are respectively connected to the two third surfaces 2211. The two first surfaces 2213 are spaced apart in the first direction. Two ends of each first surface 2213 in the third direction are respectively connected to the two third surfaces 2211. Two ends of each first surface 2213 in the second direction are respectively connected to the two second surfaces 2212. The first section 532 is disposed at the first surface 2213, and the second section 531 is disposed at the second surface 2212.

For example, the electrode plate 20 is a rectangular plate. A length direction of the electrode plate 20 is defined as the first direction, a height direction of the electrode plate 20 is defined as the second direction, and a thickness direction of the electrode plate 20 is defined as the third direction. The first direction may extend in the left-right direction, the second direction may extend in the up-down direction, and the third direction may extend in the front-rear direction. Since the electrode plate assembly 221 is formed by stacking the electrode plates 20, the length direction, the height direction, and the thickness direction of the electrode plate 20 are also the length direction, the height direction, and the thickness direction of the electrode plate assembly 221. This will not be described here again. The outer surface of the electrode plate 20 includes the third surface 2211, the second surface 2212, and the first surface 2213. Two third surfaces 2211, two second surfaces 2212, and two first surfaces 2213 are respectively present. Specifically, the two third surfaces 2211 are spaced apart in the front-rear direction, the height direction of each third surface 2211 extends in the up-down direction, and the length direction of each third surface 2211 extends in the left-right direction. The two second surfaces 2212 are spaced apart in the up-down direction, one second surface 2212 is located above the third surface 2211, the other second surface 2212 is located below the third surface 2211, and the front and rear ends of each second surface 2212 are respectively connected to the third surfaces 2211. The two first surfaces 2213 are spaced apart in the left-right direction, the front and rear ends of each first surface 2213 are respectively connected to the two third surfaces 2211, and the upper and lower ends are respectively connected to the second surfaces 2212. In this case, the first section 532 is disposed at the first surface 2213, and the second section 531 is disposed at the second surface 2212. That is, the tab 50 is bent to form an L-shaped structure, the first section 532 is insulated from the electrode plate 20, and the second section 531 is electrically connected to the second surface 2212 of the electrode plate 20.

It is to be understood that the second surface 2212 and the first surface 2213 corresponding to the electrode plate assembly 221 may be continuous surfaces or discrete surfaces. They can be formed specifically depending on the specific arrangements of the positive electrode plate, the negative electrode plate, and the separator, as long as the positive electrode plates on the same side of the electrode plate assembly 221 can be electrically connected with the second section 531, or the negative electrode plates on the same side of the electrode plate assembly 221 can be electrically connected with the first section 532. Both cases fall within the scope of concept of the present disclosure.

In this embodiment, by defining the shapes of the electrode plate 20 and the electrode plate assembly 221, it can be seen that the bent tab 50 of the present disclosure can be applied to the existing electrode plate assembly 221, which is conducive to the lead out of the current from a side surface.

According to an embodiment of the present disclosure, the length of the second section 531 is not greater than that of the electrode plate assembly 221 in the first direction. For example, a first end of the second section 531 extends in the first direction, a second end of the second section 531 is connected to an upper end of the first section 532, and the first section 532 extends in the second direction. In the first direction, the first end of the second section 531 may be flush with the end portion of the terminal pole assembly, or shorter than the end portion of the terminal pole assembly. That is, the lengths of the first section 532 and the second section 531 can be designed according to specific requirements, as long as a top-out structure of the tab 50 can be realized. Any such design is embraced in the scope of concept of the present disclosure.

In some specific embodiments of the present disclosure, the surface area of the second surface 2212 is larger than that of the first surface 2213. For example, the dimension of the electrode plate 20 in the first direction is larger than that in the second direction, the terminal pole assembly is disposed at the end portion of the electrode plate assembly 221 in the first direction, the second section 531 extends along the first direction and is located at the end portion of the electrode plate assembly 221 in the second direction, and the first section 532 extends along the second direction and is located at the end portion of the electrode plate assembly 221 in the first direction. That is, the electrode plate 20 has a length direction and a height direction. The length direction can be used as the first direction, and the height direction can be used as the second direction. That is, the dimension of the height direction is smaller than that of the length direction. When the first direction extends in the left-right direction and the second direction extends in the up-down direction, the terminal pole assembly may be located on the left or right side of the electrode plate assembly 221, the first section 532 is also correspondingly located on the left or right side of the electrode plate assembly 221, and the second section 531 is located on the upper or lower side of the electrode plate assembly 221.

In this embodiment, by disposing the first section 532 at the first surface 2213 of small area and disposing the second section 531 at the second surface 2212 of large area, correspondingly, the terminal pole assembly also corresponds to the first surface 2213. Through such an arrangement, the space constraint in the height direction of the electrode plate assembly 221 caused by disposing the terminal pole assembly on the end portion of the electrode plate assembly 221 extending in the second direction can be avoided, to avoid the reduced battery capacity caused by the narrowed size range of the electrode plate assembly 221 in the second direction. The second section 531 is connected to the end portion of the electrode plate assembly 221 extending in the first direction, which expands the connection area between the second section 531 and the electrode plate 20, thus expanding the lead-out range of the current. Additionally, by arranging the second section 531 to correspond to the second surface 2212 of large area, the current flowing-through area of the tab 50 can be further increased while the tab 50 is top out.

According to an embodiment of the present disclosure, as shown in FIGs. 1 to 3, the positive electrode terminal pole 31 of the terminal pole assembly is disposed at one end portion of the electrode plate assembly 221 in the first direction, and the negative electrode terminal pole 32 is disposed at the other end portion of the electrode plate assembly 221 in the first direction. For example, the first direction of the electrode plate assembly 221 extends in the left-right direction. In this case, the positive electrode terminal pole 31 of one terminal pole assembly is located on the left side of the electrode plate assembly 221, and the negative electrode terminal pole 32 of the terminal pole assembly is located on the right side of the electrode plate assembly 221. It is to be understood that in this embodiment, one electrode plate assembly 221 is, without limitation, arranged with one terminal pole assembly.

In some specific embodiments of the present disclosure, as shown in FIGs. 1 to 3, the second section 531 corresponding to the positive electrode terminal pole 31 is located at one end portion of the electrode plate assembly 221 in the second direction, and the second section 531 corresponding to the negative electrode terminal pole 32 is located at the other end portion of the electrode plate assembly 221 in the second direction. For example, when the positive electrode terminal pole 31 of the terminal pole assembly is disposed at one end portion of the electrode plate assembly 221 in the first direction and the negative electrode terminal pole 32 is disposed at the other end portion of the electrode plate assembly 221 in the first direction, the second section 531 corresponding to the positive electrode terminal pole 31 is located at one end portion of the electrode plate assembly 221 in the second direction, and the second section 531 corresponding to the negative electrode terminal pole 32 is located at the other end portion of the electrode plate assembly 221 in the second direction. When the first direction is the left-right direction and the second direction is the up-down direction, the second section 531 corresponding to the positive electrode terminal pole 31 of one terminal pole assembly may be located above the electrode plate assembly 221, and the second section 531 corresponding to the negative electrode terminal pole 32 of the terminal pole assembly may be located below the electrode plate assembly 221.

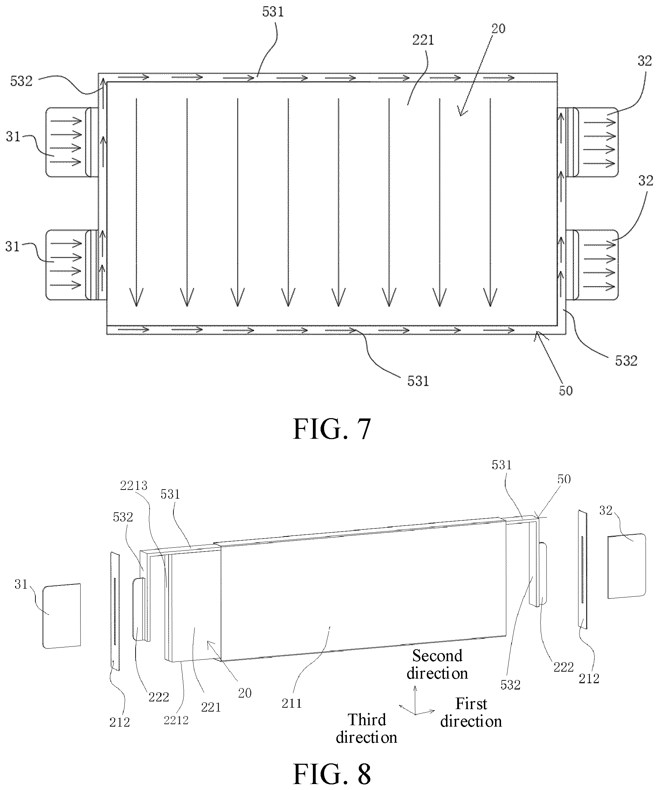

According to an embodiment of the present disclosure, as shown in FIGs. 8 to 10, the second section 531 corresponding to the positive electrode terminal pole 31 and the second section 531 corresponding to the negative electrode terminal pole 32 are located at the same end portion of the electrode plate assembly 221 in the second direction, and spaced apart in the first direction. For example, when the positive electrode terminal pole 31 of the terminal pole assembly is disposed at one end portion of the electrode plate assembly 221 in the first direction and the negative electrode terminal pole 32 is disposed at the other end portion of the electrode plate assembly 221 in the first direction, the second section 531 corresponding to the positive electrode terminal pole 31 and the second section 531 corresponding to the negative electrode terminal pole 32 are located at the same end portion of the electrode plate assembly 221 in the second direction. When the first direction is the left-right direction and the second direction is the up-down direction, the second section 531 corresponding to the positive electrode terminal pole 31 and the second section 531 corresponding to the negative electrode terminal pole 32 of one terminal pole assembly may be both located above or below the electrode plate assembly 221.

In some specific embodiments of the present disclosure, as shown in FIG. 11, the positive electrode terminal pole 31 and the negative electrode terminal pole 32 of the terminal pole assembly are located at the same end portion of the electrode plate assembly 221 in the first direction, the second section 531 corresponding to the positive electrode terminal pole 31 is located at one end portion of the electrode plate assembly 221 in the second direction, and the second section 531 corresponding to the negative electrode terminal pole 32 is located at the other end portion of the electrode plate assembly 221 in the second direction. That is, the positive electrode terminal pole 31 and the negative electrode terminal pole 32 of one terminal pole assembly may be located at the same end portion of the electrode plate assembly 221 and at the same end portion of the electrode plate assembly 221 in the first direction. For example, the first direction extends in the left-right direction, and the second direction extends in the up-down direction. At this time, the positive electrode terminal pole 31 and the negative electrode terminal pole 32 are both located at the left or right side of the electrode plate assembly 221, the second section 531 corresponding to the positive electrode terminal pole 31 may be located above the electrode plate assembly 221, and the second section 531 corresponding to the negative electrode terminal pole 32 may be located below the electrode plate assembly 221.

According to an embodiment of the present disclosure, as shown in FIG. 11, two electrode plate assemblies 221 are disposed, and the two electrode plate assemblies 221 are arranged sequentially in the first direction. Each electrode plate assembly 221 has at least one terminal pole assembly, and the second section 531 corresponding to the positive electrode terminal pole 31 and the second section 531 corresponding to the negative electrode terminal pole 32 of each electrode plate assembly 221 are spaced apart in the second direction. For example, the two electrode plate assemblies 221 are arranged in the left-right direction. On the left side of one electrode plate assembly 221 away from the other electrode plate assembly 221, the positive electrode terminal pole 31 and the negative electrode terminal pole 32 of one terminal pole assembly are disposed, and on the right side of the other electrode plate assembly 221, the positive electrode terminal pole 31 and the negative electrode terminal pole 32 of the other terminal pole assembly are disposed. The second section 531 corresponding to the positive electrode terminal pole 31 of the electrode plate assembly 221 on the left side is located above the electrode plate assembly 221 on the left side, and extends in the left-right direction. The second section 531 corresponding to the negative electrode terminal pole 32 of the electrode plate assembly 221 on the right side is located below the electrode plate assembly 221 on the right side, and extends in the left-right direction.

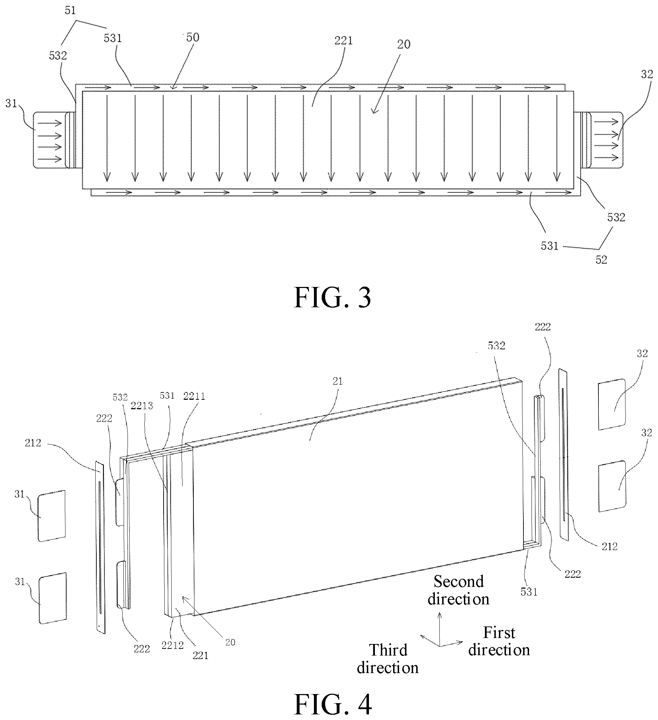

In some specific embodiments of the present disclosure, as shown in FIG. 4, one electrode plate assembly 221 is arranged with multiple terminal pole assemblies, and each terminal pole assembly corresponds to one current collector assembly and one tab assembly. It is to be understood that one or more electrode plate assemblies 221 may be arranged in this embodiment. For example, when one electrode plate assembly 221 is arranged, the one electrode plate assembly 221 may be arranged with multiple terminal pole assemblies. For example, the one electrode plate assembly 221 is correspondingly arranged with two terminal pole assemblies. The positive electrode terminal poles 31 of the two terminal pole assemblies are located on the left side of the electrode plate assembly 221, and spaced apart in the up-down direction. The negative electrode terminal poles 32 of the two terminal pole assemblies are located on the right side of the electrode plate assembly 221, and spaced apart in the up-down direction. When two electrode plate assemblies 221 are arranged, the two electrode plate assemblies 221 may be arranged in the left-right direction, and are respectively a left-side electrode plate assembly and a right-side electrode plate assembly. The positive electrode terminal pole 31 of the left-side electrode plate assembly is located above the negative electrode terminal pole 32 of the left-side electrode plate assembly, and the negative electrode terminal pole 32 of the right-side electrode plate assembly is located above the negative electrode terminal pole 32 of the right-side electrode plate assembly.

According to an embodiment of the present disclosure, as shown in FIG. 4, the positive electrode terminal pole 31 of each terminal pole assembly is located at one end portion of the electrode plate assembly 221 in the first direction, the negative electrode terminal pole 32 of each terminal pole assembly is located at the other end portion of the electrode plate assembly 221 in the first direction, the second sections 531 corresponding to the multiple positive electrode terminal poles 31 are located at one end portion of the electrode plate assembly 221 in the second direction, and the second sections 531 corresponding to the multiple negative electrode terminal poles 32 are located at the other end portions of the electrode plate assembly 221 in the second direction. That is, when one electrode plate assembly 221 is arranged with multiple terminal pole assemblies, the positive electrode terminal pole 31 of each terminal pole assembly is located at one end portion of the electrode plate assembly 221 in the first direction, the negative electrode terminal pole 32 of each terminal pole assembly is located at the other end portion of the electrode plate assembly 221 in the first direction, to achieve two polarities on different sides. The second sections 531 corresponding to the multiple positive electrode terminal poles 31 are located at one end portion of the terminal pole assembly in the second direction, and the second sections 531 corresponding to the multiple negative electrode terminal poles 32 are located at the other end portions of the electrode plate assembly 221 in the second direction. For example, when the first direction is the left-right direction and the second direction is the up-down direction, the multiple terminal pole assemblies are disposed on one electrode plate assembly 221, the positive electrode terminal pole 31 of each terminal pole assembly is located on the left side of the terminal pole assembly, and the negative electrode terminal pole 32 of each terminal pole assembly is located on the right side of the terminal pole assembly. The second section 531 corresponding to the positive electrode terminal pole 31 of each terminal pole assembly is located on the upper side of the electrode plate assembly 221, and arranged sequentially in the thickness direction of the electrode plate assembly 221. The second section 531 corresponding to the negative electrode terminal pole 32 of each terminal pole assembly is located on the lower side of the electrode plate assembly 221, and arranged sequentially in the thickness direction of the electrode plate assembly 221.

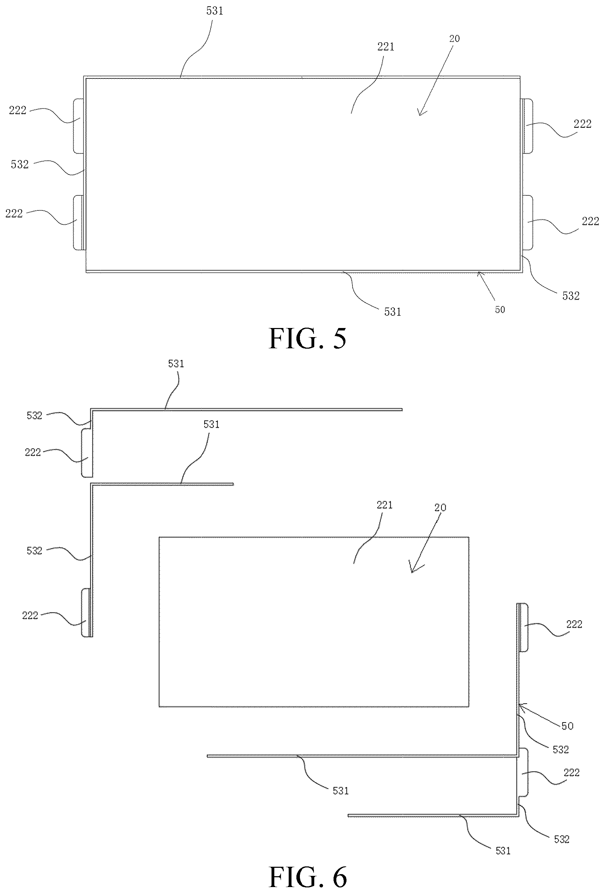

In some specific embodiments of the present disclosure, as shown in FIG. 5, on the same end portion of the electrode plate assembly 221 in the second direction, one second section 531 is electrically connected to one portion of the electrode plate 20, and another second section 531 is electrically connected to another portion of the electrode plate 20. For example, the second direction is the up-down direction, and the thickness direction of the electrode plate assembly 221 is the third direction. At least two second sections 531 are arranged sequentially in the thickness direction. One second section 531 is electrically connected to one portion of the electrode plate 20 in the thickness direction, and another second section 531 is electrically connected to another one of the electrode plate 20 in the thickness direction.

According to an embodiment of the present disclosure, as shown in FIG. 6, in the second direction, at least two second sections 531 located at the same end portion of the electrode plate assembly 221 have different lengths in the first direction. For example, the length of one second section 531 in the first direction is L1, and the length of another second section 531 in the first direction is L2, where L1<L2.

In some specific embodiments of the present disclosure, in the thickness direction of the electrode plate assembly 221, two tabs 50 are arranged in line or staggered. For example, two second sections 531 are in the same line in the first direction, that is, in the same line in the thickness direction, to achieve the arrangement in line. Alternatively, two second sections 531 are in different lines in the first direction, that is, in two lines in the thickness direction, to achieve the staggered arrangement in the thickness direction.

Hereinafter, the battery cell 2 of the present disclosure is described in detail in connection with specific embodiments.

### Embodiment 1

As shown in FIGs. 1 to 3, one electrode plate assembly 221 is arranged. The electrode plate assembly 221 is an elongated member. The length direction of the electrode plate assembly 221 extends in the left-right direction, that is, the left-right direction is defined as the first direction. The height direction of the electrode plate assembly 221 extends in the up-down direction, that is, the up-down direction is defined as the second direction. The thickness direction of the electrode plate assembly 221 extends in the front-rear direction, that is, the front-rear direction is defined as the third direction.

The terminal pole assembly includes one positive electrode terminal pole 31 and one negative electrode terminal pole 32. The positive electrode terminal pole 31 is located on the left side of the electrode plate assembly 221, and the negative electrode terminal pole 32 is located on the right side of the electrode plate assembly 221. The positive electrode current collector is located on the left side of the electrode plate assembly 221, and the negative electrode current collector is located on the right side of the electrode plate assembly 221. The positive electrode current collector is connected to the positive electrode terminal pole 31, and the negative electrode current collector is connected to the negative electrode terminal pole 32.

The positive electrode tab 51 corresponding to the positive electrode terminal pole 31 includes a second section 531 and a first section 532. The second section 531 of the positive electrode tab 51 is located below the electrode plate assembly 221 and extends in the left-right direction. The first section 532 of the positive electrode tab 51 is located on the left side of the electrode plate assembly 221 and extends in the up-down direction.

The negative electrode tab 52 corresponding to the negative electrode terminal pole 32 includes a second section 531 and a first section 532. The second section 531 of the negative electrode terminal pole 32 is located above the electrode plate assembly 221 and extends in the left-right direction. The first section 532 of the negative electrode tab 52 is located on the right side of the electrode plate assembly 221 and extends in the up-down direction.

That is, a structural design with a top-out and bent single tab arranged on two different sides, and a single terminal pole 33 arranged on a single side is used in Embodiment 1. The current conduction path is as shown in FIG. 3.

### Embodiment 2

As shown in FIGs. 4 to 7, one electrode plate assembly 221 is arranged. The electrode plate assembly 221 is an elongated member. The length direction of the electrode plate assembly 221 extends in the left-right direction, that is, the left-right direction is defined as the first direction. The height direction of the electrode plate assembly 221 extends in the up-down direction, that is, the up-down direction is defined as the second direction. The thickness direction of the electrode plate assembly 221 extends in the front-rear direction, that is, the front-rear direction is defined as the third direction.

Two terminal pole assemblies are arranged, including a first terminal pole assembly and a second terminal pole assembly. Each terminal pole assembly includes one positive electrode terminal pole 31 and one negative electrode terminal pole 32. Each positive electrode terminal pole 31 is located on the left side of the electrode plate assembly 221, and each negative electrode terminal pole 32 is located on the right side of the electrode plate assembly 221. Each positive electrode current collector is located on the left side of the electrode plate assembly 221, and each negative electrode current collector is located on the right side of the electrode plate assembly 221. The positive electrode current collector is connected to the corresponding positive electrode terminal pole 31, and the negative electrode current collector is connected to the corresponding negative electrode terminal pole 32.

The positive electrode tab 51 corresponding to each positive electrode terminal pole 31 includes a second section 531 and a first section 532. The positive electrode terminal pole 31 of the first terminal pole assembly is located above the positive electrode terminal pole 31 of the second terminal pole assembly. The first section 532 corresponding to the positive electrode terminal pole 31 of the first terminal pole assembly is located on the left side of the electrode plate assembly 221, and the second section 531 corresponding to the positive electrode terminal pole 31 of the first terminal pole assembly is located on the upper side of the electrode plate assembly 221. The second section 531 corresponding to the positive electrode terminal pole 31 of the first terminal pole assembly is located behind the second section 531 corresponding to the positive electrode terminal pole 31 of the second terminal pole assembly. The first section 532 corresponding to the positive electrode terminal pole 31 of the first terminal pole assembly is connected to the top portion of one positive electrode current collector in the up-down direction, and the first section 532 corresponding to the positive electrode terminal pole 31 of the second terminal pole assembly is connected to the end portion of the other positive electrode current collector in the front-rear direction.

The negative electrode tab 52 corresponding to each negative electrode terminal pole 32 includes a second section 531 and a first section 532. The negative electrode terminal pole 32 of the first terminal pole assembly is located above the negative electrode terminal pole 32 of the second terminal pole assembly. The first section 532 corresponding to the negative electrode terminal pole 32 of the first terminal pole assembly is located on the right side of the electrode plate assembly 221, and the second section 531 corresponding to the negative electrode terminal pole 32 of the first terminal pole assembly is located on the lower side of the electrode plate assembly 221. The second section 531 corresponding to the negative electrode terminal pole 32 of the first terminal pole assembly is located in front of the second section 531 corresponding to the negative electrode terminal pole 32 of the second terminal pole assembly. The first section 532 corresponding to the negative electrode terminal pole 32 of the first terminal pole assembly is connected to the end portion of one negative electrode current collector in the front-rear direction, and the first section 532 corresponding to the negative electrode terminal pole 32 of the second terminal pole assembly is connected to the bottom portion of the other negative electrode current collector in the up-down direction.

That is, a structural design with multiple top-out and bent single tabs 50 arranged on two different sides and multiple terminal poles 33 of the same polarity arranged on a single side is used in Embodiment 2. When the height of the battery cell 2 is large, the number of terminal pole 33 can be adjusted according to the actual design size of the terminal pole 33. The current conduction path is as shown in FIG. 7.

### Embodiment 3

As shown in FIGs. 11 to 13, two electrode plate assemblies 221 are arranged, which are respectively a first electrode plate assembly 221 and a second electrode plate assembly 221. Each electrode plate assembly 221 is arranged with one terminal pole assembly and one tab assembly. The first electrode plate assembly 221 and the second electrode plate assembly 221 extend in the left-right direction. The positive electrode terminal pole 31 and the negative electrode terminal pole 32 of the first electrode plate assembly 221 are disposed on the left side of the first electrode plate assembly 221, and the positive electrode terminal pole 31 is located above the negative electrode terminal pole 32. Similarly, the positive electrode terminal pole 31 and the negative electrode terminal pole 32 of the second electrode plate assembly 221 are disposed on the right side of the second electrode plate assembly 221, and the positive electrode terminal pole 31 is located above the negative electrode terminal pole 32.

For the first electrode plate assembly 221, the lower end of the first section 532 corresponding to the positive electrode terminal pole 31 is connected to the positive electrode current collector, the first section 532 extends upwards, the left end of the second section 531 is connected to the first section 532, and the second section 531 is located on the upper side of the first electrode plate assembly 221 and extends rightwards. The upper end of the first section 532 corresponding to the negative electrode terminal pole 32 is connected to the negative electrode current collector, the first section 532 extends downwards, the left end of the second section 531 is connected to the lower end of the first section 532, and the second section 531 is located on the lower side of the first electrode plate assembly 221 and extends rightwards.

For the second electrode plate assembly 221, the lower end of the first section 532 corresponding to the positive electrode terminal pole 31 is connected to the positive electrode current collector, the first section 532 extends upwards, the right end of the second section 531 is connected to the upper end of the first section 532, and the second section 531 is located on the upper side of the first electrode plate assembly 221 and extends leftwards. The upper end of the first section 532 corresponding to the negative electrode terminal pole 32 is connected to the negative electrode current collector, the first section 532 extends downwards, the right end of the second section 531 is connected to the lower end of the first section 532, and the second section 531 is located on the lower side of the second electrode plate assembly 221 and extends leftwards.

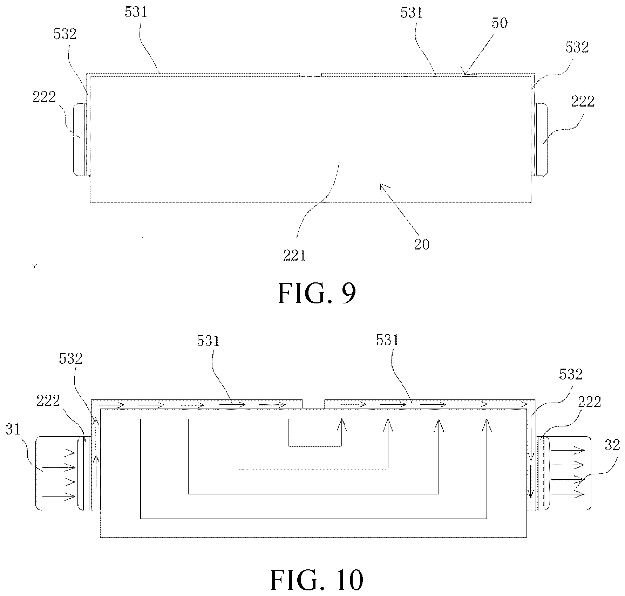

That is, a structural design with a top-out and bent single tab 50 arranged on two different sides, and multiple terminal poles 33 of different polarities arranged on a single side is used in Embodiment 3. The current conduction path is as shown in FIG. 10.

### Embodiment 4

As shown in FIGs. 8 to 10, one electrode plate assembly 221 is arranged, and the electrode plate assembly 221 is arranged with one terminal pole assembly. The terminal pole assembly includes a positive electrode terminal pole 31 and a negative electrode terminal pole 32. The positive electrode terminal pole 31 is located on the left side of the electrode plate assembly 221, and the negative electrode terminal pole 32 is located on the right side of the electrode plate assembly 221.

The positive electrode tab 51 corresponding to the positive electrode terminal pole 31 includes a second section 531 and a first section 532. The negative electrode terminal pole 32 corresponding to the negative electrode terminal pole 32 also includes a second section 531 and a first section 532.

The first section 532 corresponding to the positive electrode terminal pole 31 is located on the left side of the electrode plate assembly 221, and the first section 532 corresponding to the negative electrode terminal pole 32 is located on the right side of the electrode plate assembly 221. The second section 531 corresponding to the positive electrode terminal pole 31 is located on the upper side of the electrode plate assembly 221 and extends rightwards. The second section 531 corresponding to the negative electrode terminal pole 32 is also located on the upper side of the electrode plate assembly 221 and extends rightwards. The right end of the second section 531 corresponding to the positive electrode terminal pole 31 is spaced apart from the left end of the second section 531 corresponding to the negative electrode terminal pole 32.

That is, a structure with a top-out and bent single tab 50 arranged on the same side and a single terminal pole 33 arranged on a single side is used in Embodiment 4. The current conduction path is as shown in FIG. 13.

The present disclosure also provides a battery pack 1000. The battery pack 1000 includes a battery cell 2 and a heat transport member 40. The battery cell 2 is a battery cell 2 according to any one of the above embodiments. The heat transport member 40 can transport the heat of the battery cell 2 close to the first surface 2213 to the outside of housing 21 corresponding to the second surface 2212. That is, by using the heat transport member 40, the heat of the battery cell 2 can be transported out timely, to improve the heat dissipation efficiency, and promote the fast charging.

According to an embodiment of the present disclosure, the battery pack 1000 further includes a tray. A holding space is defined in the tray, where the battery cell 2 is located in the holding space, the heat transport member 40 is located in the holding space, and the heat transport member 40 is thermally conductively connected to the battery cell 2.

According to an embodiment of the present disclosure, the heat transport member 40 includes a thermally conductive member 401, and the thermally conductive member 401 is a first thermally conductive member 43. The first thermally conductive member 43 can transport the heat near the second surface 2212 out, to cool the structure near the second surface 2212.

In some specific embodiments of the present disclosure, the heat transport member 40 includes a thermally conductive member 401, and the thermally conductive member 401 is a second thermally conductive member 44. The second thermally conductive member 44 is disposed on the housing21 and thermally conductively connected to the terminal pole 33, and the second thermally conductive member 44 extends towards a position on the housing 21 corresponding to the second surface 2212. By arranging the second thermally conductive member 44, the heat near the terminal pole 33 can be transported out, to promote the fast charging by improve the cooling effect and cooling rate.

According to an embodiment of the present disclosure, multiple battery cells 2 are disposed, the second thermally conductive member 44 is respectively thermally conductively connected to the terminal poles of two adjacent battery cells 2. For example, the multiple battery cells 2 are arranged sequentially in the third direction, and the second thermally conductive member 44 is respectively thermally conductively connected to the terminal poles 33 of two adjacent battery cells 2 in the third direction. That is, multiple battery cells 2 are disposed, the multiple battery cells 2 are arranged sequentially in the third direction, and the third direction may be the thickness direction of the battery cell 2. The second thermally conductive member 44 is respectively thermally conductively connected to the terminal poles 33 of two adjacent battery cells 2 in the third direction.

For example, in the third direction, two battery cells 2 are disposed, which is respectively a first battery cell and a second battery cell. The first battery cell has a first terminal pole assembly, and the second battery cell has a second terminal pole assembly. One terminal pole 33 of the first terminal pole assembly is located on the left side of the first battery cell, and one terminal pole 33 of the second terminal pole assembly is also located on the left side of the second battery cell. Since the first battery cell and the second battery cell are arranged sequentially in the third direction, at least one terminal pole 33 of the first battery cell and at least one terminal pole 33 of the second battery cell are arranged adjacent to each other in the third direction, with a gap therebetween. The second thermally conductive member 44 is disposed at this gap position, and the heat can be transported from the terminal poles 33 of two battery cells 2 by one second thermally conductive member 44. Optionally, in the second direction, the length of the second thermally conductive member 44 may be equal to the length of the terminal pole 33 or larger than the length of the terminal pole 33. When the lengths are equal, the heat dissipation effect for the terminal pole 33 can be ensured, and when the length is equal to the length of the terminal pole 33, the heat can be transported from the terminal pole 33 to a wider range.

Further, the second thermally conductive member 44 is in surface contact with the terminal pole 33, to improve the heat transfer effect. For example, the terminal pole 33 adopts a sheet-like structure, to promote the surface contact.

In some specific embodiments of the present disclosure, the battery pack 1000 further includes a heat dissipator 45. At least a portion of the heat dissipator 45 is arranged facing first surface 2213 and can exchange heat with terminal pole 33.

For example, the heat transport member 40 includes a heat dissipator 45, where the heat dissipator 45 is located at the outer side of the terminal pole 33 away from the electrode plate assembly 221 in the first direction, and thermally conductively connected to the terminal pole 33. That is, the heat transport member 40 includes a heat dissipator 45, where the heat dissipator 45 is located at a side of the terminal pole 33 away from the electrode plate assembly 221 in the first direction, and thermally conductively connected to the terminal pole 33. That is, a heat dissipator 45 is designed at an outer side of the terminal pole 33, to reduce the rise of the temperature of the terminal pole 33.

According to an embodiment of the present disclosure, the heat dissipator 45 includes at least one tubular member, the tubular member internally has a first fluid channel for a cooling fluid to flow through, and a portion of the tubular member forms at least a portion of the heat transport member 40, to improve the heat dissipation efficiency through heat exchange.

In some specific embodiments of the present disclosure, the battery pack 1000 further includes a cooler 402, and the cooler 402 is thermally conductively connected to the housing 21 corresponding to the second surface 2212. In this embodiment, the heat dissipation efficiency and heat dissipation effect of heat near the second surface 2212 are improved by arranging the cooler 402.

In some specific embodiments of the present disclosure, the first thermally conductive member 43 is respectively thermally conductively connected to the battery cell 2 and the cooler 402. That is, the heat exchange between the battery cell 2 and the cooler 402 can be realized through the first thermally conductive member 43. In this embodiment, by arranging the first thermally conductive member 43, the damage of the battery cell 2 due to the direct contact of the cooler 402 with the battery cell 2 is avoided, and a too large design of the cooler 402 is also avoided. When multiple battery cells 2 are arranged, one first thermally conductive member 43 can correspond to multiple battery cells 2.

According to an embodiment of the present disclosure, the cooler 402 and the first thermally conductive member 43 are a sheet-like structure, respectively, and the first thermally conductive member 43 is in contact with the cooler 402 and the battery cell 2 respectively. For example, the upper end surface of the first thermally conductive member 43 is in contact with the lower end surface of the cooler 402, and the lower end surface of the first thermally conductive member 43 is in contact with the upper end surface of the battery cell 2, to improve the heat conduction area by means of surface contact, improve the stress balance and heat dissipation uniformity at multiple positions on the battery cell 2, and improve the stress balance and heat dissipation uniformity of multiple battery cells 2 when multiple battery cells 2 are arranged.

According to an embodiment of the present disclosure, the holding space has at least one open end in the axial direction. The cooler 402 serves as a bottom plate or a top plate of the tray, to improve the space utilization, and improve the structure compactness.

According to an embodiment of the present disclosure, the cooler 402 internally has a second fluid channel for a cooling fluid to flow through, and the cooler 402 is thermally conductively connected to the heat transport member 40.

In some specific embodiments of the present disclosure, the cooler 402 internally has a second fluid channel, the heat dissipator 45 internally has a first fluid channel, and the first fluid channel is in communication with the second fluid channel. At this time, the cooler 402 can be used as a liquid cooling plate. By providing a fluid in the heat dissipator 45, the heat dissipation effect near the terminal pole 33 can be improved.

According to an embodiment of the present disclosure, two coolers 402 are disposed, and the battery cell 2 is located between the coolers 402. That is, the heat transport member 40 includes two coolers 402. For ease of description, the two coolers are respectively a first cooler 41 and a second cooler 42. The first cooler 41 can be arranged above the battery cell 2, and the second cooler 42 can be located below the battery cell 2. For example, the electrode plate 20 has a first direction and a second direction. The dimension of the electrode plate 20 in the first direction is larger than that in the second direction. The first cooler 41 is arranged at one end portion the battery cell 2 in the second direction, and the second cooler 42 is arranged at the other end portion of the battery cell 2 in the second direction.

The first cooler 41 can conduct heat from the upper portion of the battery cell 2, and the second cooler 42 can conduct heat from the lower portion of the battery cell 2. It can be seen that in this embodiment, through the cooperation of the first cooler 41 and the second cooler 42, a sandwich-like cooling structure for cooling the battery cell 2 at two sides is formed, to reduce the temperature difference between the two sides of the battery cell 2, for example, the temperature difference in the height direction. By arranging the first cooler 41 and the second cooler 42 on both sides of the battery cell 2, to realize heat dissipation in this direction. By combining with the terminal pole 33 in the first direction and the second direction, the heat dissipation in the first direction is realized, thus achieving the multi-directional heat dissipation of the battery cell 2. Further, the heat dissipation effect is improved through the sheet-like terminal pole 33.

Additionally, the first cooler 41 can be used as the top plate of the tray, and the second cooler 42 can be used as the bottom plate of the tray, to improve the heat dissipation effect and avoid the occupation of too much space in the height direction due to the presence of the tray, the bottom plate, the first cooler 41, and the second cooler 42 in the height direction.

When the tab 50 has a sheet-like structure, the large face of the tab 50 may be arranged facing the cooler 402, to improve the heat dissipation rate of the tab 50.

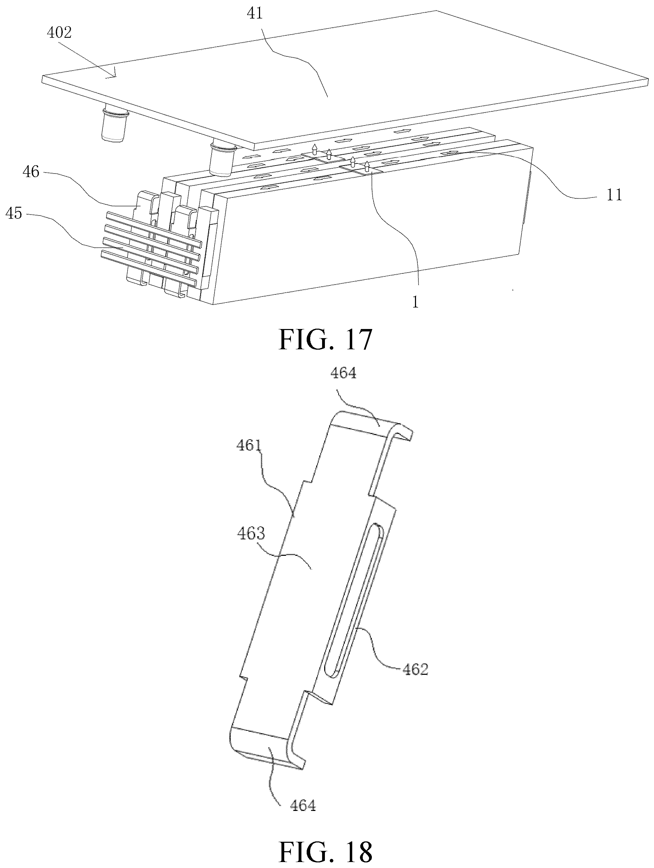

It is to be understood that the cooler 402 can be arranged on the side of the explosion-proof valve 1 away from the electrode plate assembly 221. For example, the cooler 402 is arranged above the explosion-proof valve 1. Optionally, an avoidance structure is arranged on the cooler 402, to avoid blocking the opening of the disclosure-proof valve 1. The gas exhaust direction 11 of the explosion-proof valve 1 is shown in FIG. 17, which goes upwards and then spread outwards.

In some specific embodiments of the present disclosure, the battery pack 1000 further includes a connecting member 46. At least a portion of the connecting member 46 is located between the heat dissipator 45 and the terminal pole 33, and respectively thermally conductively connected to the heat dissipator 45 and the terminal pole 33. By arranging the connecting member 46, the problem of difficult installation and low firmness of the heat dissipator and the terminal pole 33 are solved. When the terminal pole 33 is connected by the connecting member 46 to the heat dissipator 45, the heat dissipator 45 may be located at an outer side of the connecting member 46, and the terminal pole 33 may be located at an inner side of the connector 46.

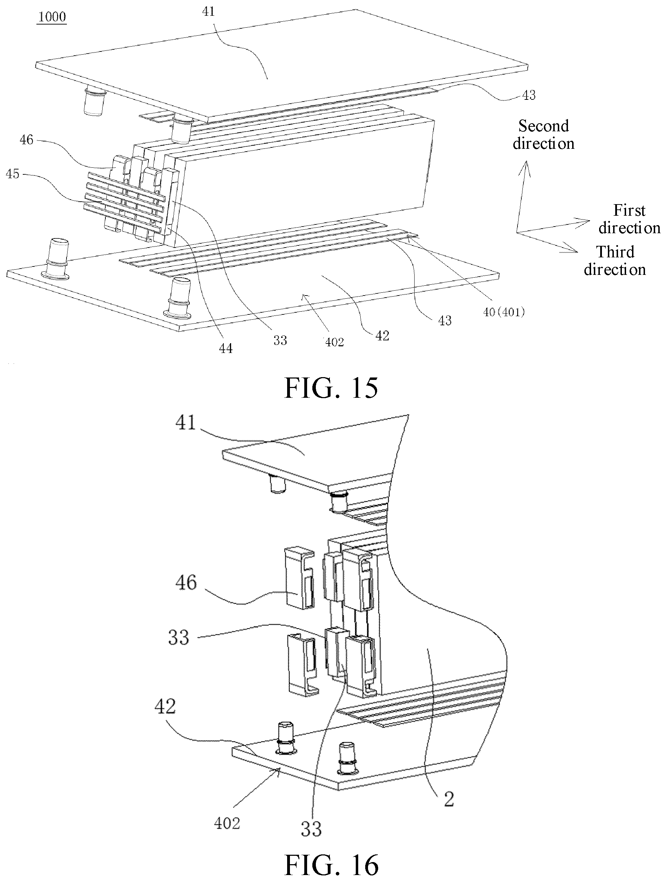

According to an embodiment of the present disclosure, as shown in FIGs. 16 and 18, the connecting member 46 includes a first connecting portion 461, a second connecting portion 462, and a third connecting portion 463. The first connecting portion 461 is connected to the terminal pole 33 of one of the two battery cells 2 adjacent to each other in the third direction, the second connecting portion 462 is connected to the terminal pole 33 of the other of the two battery cells 2 adjacent to each other in the third direction, and the third connecting portion 463 is connected to the first connecting portion 461 and the second connecting portion 462 respectively. They mate to form an accommodation groove, configured to accommodate the second thermally conductive member 44. For example, the third direction is the front-rear direction. The first connecting portion 461 and the second connecting portion 462 are spaced apart in the front-rear direction, and the third connecting portion 463 may be located between the first connecting portion 461 and the second connecting portion 462.A rear end of the third connecting portion 463 is connected to the first connecting portion 461, and a front end of the third connecting portion 463 is connected to the second connecting portion 462. The second thermally conductive member 44 is located between the first connecting portion 461 and the second connecting portion 462, and thermally conductively connected to the first connecting portion 461, the second connecting portion 462, and the third connecting portion 463 respectively. Additionally, the third connecting portion 463 is thermally conductively connected to the heat dissipator 45. The thermally conductive connection in the present disclosure means that heat conduction can occur between two members, including direct connection, indirect connection, spaced arrangement, and other positional relationships.

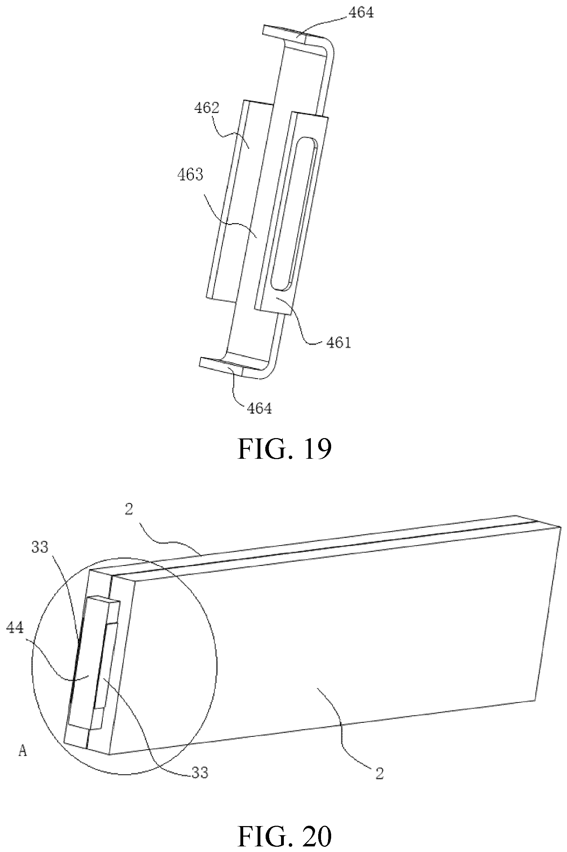

According to an embodiment of the present disclosure, as shown in FIGs. 18 and 19, the connecting member 46 further includes a fourth connecting portion 464. The fourth connecting portion 464, together with the first connecting portion 461 and the second connecting portion 462, is located at the same side of the third connecting portion 463. The fourth connecting portion 464 is located at at least one end of the third connecting portion 463 in the second direction. The fourth connecting portion 464 serves to limit the second thermally conductive member 44. Optionally, two fourth connecting portions 464 are arranged, where one fourth connecting portion 464 is located at an upper end of the third connecting portion 463, and the other fourth connecting portion 464 is located at a lower end of the third connecting portion 463. It can be seen that through the first connecting portion 461, the second connecting portion 462, the third connecting portion 463, and the fourth connecting portion 464, heat can be conducted from the periphery of the second thermally conductive member 44 in multiple directions, to transport the heat timely and efficiently to the heat dissipator 45. For example, the second thermally conductive member 44 is thermally conductively connected to the cooler 402 by the fourth connecting portion 464.

Further, the second thermally conductive member 44 is also thermally conductively connected to the current collector 222 corresponding to the terminal pole 33,to improve the heat dissipation effect for the current collector 222.

According to an embodiment of the present disclosure, the housing21 may include a side plate 211 and a cover plate 212, where the side plate 211 and the cover plate 212 mate to form an accommodation space. The terminal pole 33 extends out of the accommodation space through the cover plate 212. The cover plate 212 can be selected from, but is not limited to, an aluminum cover plate 212 (with a thickness in the range of 0.5-3.5 mm) or a steel cover plate 212 (with a thickness in the range of 0.2-2 mm). The side plate 211211 can be selected from, but is not limited to, an aluminum plate (with a thickness in the range of 0.3-2 mm) or a steel plate (with a thickness in the range of 0.1-1 mm).

The maximum length of the terminal pole 33 is defined as L1, the length of the cover plate 212 is defined as L2, the gap between the terminal pole 33 and the cover plate 212 is defined as L3, the gap between two adjacent terminal poles 33 is defined as L4, and the number of terminal pole 33 is defined as N, where these parameters meet a formula below: L1=(L2-L3*2-(N-1)L4)/N.

Optionally, in the second direction, at least one end of the connecting member 46 is thermally conductively connected to the cooler 402. The second thermally conductive member 44 may be made of a highly thermally conductive material. When the second thermally conductive member 44 is arranged between the cover plate 212 and the connecting member 46, the third connecting portion 463 can conduct the heat upwards or downwards to the cooler 402 along the cover plate 212, to increase the heat dissipation. The heat of the terminal pole 33 and the current collector 222 can be taken away by the connecting member 46 on a whole, to improve the fast charging ability. Specific heat dissipation paths may include but are not limited to the following paths:
Heat dissipation path 1: bent tab→terminal pole 33→connecting member 46→first thermally conductive member43→double-side cooler;
Heat dissipation path 2: bent tab→terminal pole 33→connecting member 46→heat dissipator 45;
Heat dissipation path 3: bent tab→cover plate 212-second thermally conductive member 44→connecting member 46-first thermally conductive member 43→double-side cooler;
Heat dissipation path 4: bent tab→cover plate 212-second thermally conductive member 44→connecting member 46→heat dissipator 45;
Heat dissipation path 5: top-out tab→housing21→first thermally conductive member43-double-side cooler.

According to an embodiment of the present disclosure, the connecting member 46 is welded with the terminal pole 33.The connection reliability can be increased by welding. Further, a side surface of the terminal pole 33 is in surface contact with the connecting member 46. For example, the length direction of the terminal pole 33 extends in the up-down direction, the width direction extends in the left-right direction, a side surface of the terminal pole 33 in the thickness direction of the electrode plate assembly 221 is in contact with a side surface of the connecting member 46, to increase the welded area between the terminal pole 33 and the connecting member 46. Optionally, the connecting member 46 is bonded to the heat dissipator 45, to increase the assembly efficiency.

In summary, according to the terminal pole 33, the battery cell 2, and the battery pack 1000 provided in the embodiments of the present disclosure, one or more tabs 50 can be designed on the battery cell 2, which can be flexibly arranged on the same side or different sides of the battery cell 2. Moreover, the terminal pole 33 of a new structure and the design of heat transport member 40 with a high heat dissipation path can be adopted, to improve the high-rate fast charging ability. Different from the traditional battery core having a positive and negative terminal pole 33 on two sides, the heat dissipation area of the current collector 222 is increased in the present disclosure, to improve the current flowing-through capacity of the electrode plate assembly 221. By combining a high heat dissipation design, such as the coolers 402 arranged on two sides, by the connecting member 46 mating with the heat dissipator 45, and by the second thermally conductive member 44 added between the connecting member 46 and the cover plate 212, the heat is taken away from the terminal pole 33. to improve the fast-charging ability of the power battery as a whole.

The present disclosure further provides a vehicle. The vehicle includes a battery pack 1000 according to any of the above embodiments. Because the battery pack 1000 has good heat dissipation effect and thus improved fast charging ability, the vehicle of the present disclosure also has the advantage of high fast-charging ability. This will not be described here again.

Although some specific embodiments of the present disclosure have been described in detail by way of examples, a person skilled in the art should understand that the foregoing examples are merely for description, and not intended to limit the scope of the present disclosure. A person skilled in the art should appreciate that modifications can be made to the foregoing embodiments without departing from the scope and spirit of the present disclosure. The scope of the present disclosure is defined by the appended claims.

## Claims

1. A battery cell (2), comprising:
a housing (21), an accommodation space being defined in the housing (21);
an electrode plate (20), the electrode plate (20) being located in the accommodation space, the electrode plate (20) at least having a first surface and a second surface;
a tab (50) and a current collector (222), the tab (50) being disposed at the electrode plate (20), the tab (50) comprising a first section (532) and a second section (531) in connection with each other, the first section (532) extending out of the electrode plate (20) from the first surface, the current collector (222) being disposed in the first section (532), and the second section (531) extending out of the electrode plate (20) from the second surface, to transfer a current between the second section (531) and the second surface; and
a terminal pole (33), the terminal pole being disposed at the current collector (222) and extending out of the housing (21).

2. The battery cell (2) according to claim 1, wherein at least one terminal pole (33) is a sheet-like structure.

3. The battery cell (2) according to claim 1 or 2, wherein the electrode plate (20) has edges extending along a first direction, a second direction, and a third direction, the first direction and the second direction define a first plane, the first direction and the third direction define a second plane, and the second direction and the third direction define a third plane; and
the first surface and the second surface are connected, the first surface is parallel to the third plane, and the second surface is parallel to the second plane.

4. The battery cell (2) according to claim 3, wherein the surface area of the second surface is larger than the surface area of the first surface.

5. The battery cell (2) according to claim 3, wherein the terminal pole (33) comprises a positive electrode terminal pole (31) and a negative electrode terminal pole (32), the second section (531) corresponding to the positive electrode terminal pole (31) is located at one end portion of the electrode plate (20) in the second direction, and the second section (531) corresponding to the negative electrode terminal pole (32) is located at the other end portion of the electrode plate (20) in the second direction.

6. The battery cell (2) according to claim 3, wherein the terminal pole (33) comprises a positive electrode terminal pole (31) and a negative electrode terminal pole (32), the second section (531) corresponding to the positive electrode terminal pole (31) and the second section (531) corresponding to the negative electrode terminal pole (32) are located at the same end portion of the electrode plate (20) in the second direction, and spaced apart in the first direction.

7. The battery cell (2) according to claim 5, wherein the positive electrode terminal pole (31) and the negative electrode terminal pole (32) are located at the same end portion of the electrode plate (20) in the first direction.

8. The battery cell (2) according to claim 5, wherein the positive electrode terminal pole (31) is located at one end portion of the electrode plate (20) in the first direction, and the negative electrode terminal pole (32) is located at the other end portion of the electrode plate (20) in the first direction.

9. The battery cell (2) according to any one of claims 3 to 8, comprising:
an electrode plate assembly (221), the electrode plate assembly (221) comprising a plurality of stacked electrode plates (20), and the electrode plates (20) comprising a positive electrode plate and a negative electrode plate;
a tab assembly, the tab assembly comprising a positive electrode tab (51) and a negative electrode tab (52), the positive electrode tab (51) being electrically connected to the positive electrode plate, and the negative electrode tab (52) being electrically connected to the negative electrode plate;
a current collector assembly, the current collector assembly comprising a positive electrode current collector and a negative electrode current collector, the positive electrode current collector being connected to the positive electrode tab (51), and the negative electrode current collector being connected to the negative electrode tab (52); and
a terminal pole assembly, the terminal pole assembly comprising two terminal poles (33), and the two terminal poles (33) being respectively the positive electrode terminal pole (31) connected to the positive electrode current collector and the negative electrode terminal pole (32) connected to the negative electrode current collector.

10. The battery cell (2) according to claim 9, wherein a plurality of electrode plate assemblies (221) are arranged, and each of the electrode plate assembly (211) is arranged with one tab assembly, one current collector assembly, and one terminal pole assembly.

11. The battery cell (2) according to any one of claims 9 and 10, wherein a plurality of terminal pole assemblies, a plurality of tab assemblies, and a plurality of current collector assemblies are disposed, and the plurality of terminal pole assemblies are fitted to one electrode plate assembly (221).

12. A battery pack (1000), comprising:
a battery cell (2), the battery cell (2) being a battery cell (2) according to any one of claims 1 to 11; and
a heat transport member (40), the heat transport member (40) transporting the heat of the battery cell (2) close to the first surface to the outside of the housing (21) corresponding to the second surface.

13. The battery pack (1000) according to claim 12, wherein the heat transport member (40) comprises:
a thermally conductive member (401), the thermally conductive member (401) is disposed on the housing (21) and thermally conductively connected to the terminal pole (33), and the thermally conductive member (401) extends towards a position on the housing (21) corresponding to the second surface.

14. The battery pack (1000) according to claim 13, wherein a plurality of battery cells (2) are disposed, and the thermally conductive member (401) is respectively thermally conductively connected to the terminal poles (33) of two adjacent battery cells (2).

15. The battery pack (1000) according to any one of claims 12 to 14, further comprising:
a heat dissipator (44), at least a portion of the heat dissipator (44) being arranged facing the first surface and exchanging heat with the terminal pole (33).

16. The battery pack (1000) according to claim 15, wherein the heat dissipator (44) comprises at least one tubular member, the tubular member internally has a first fluid channel for a cooling fluid to flow through, and a portion of the tubular member forms at least a portion of the heat transport member (40).

17. The battery pack (1000) according to any one of claims 12 to 16, further comprising:
a cooler (402), the cooler (402) being thermally conductively connected to the housing (21) corresponding to the second surface.

18. The battery pack (1000) according to claim 17, wherein the cooler (402) internally has a second fluid channel for a cooling fluid to flow through, and the cooler (402) is thermally conductively connected to the heat transport member (40).

19. The battery pack (1000) according to claim 17, wherein two coolers (402) are disposed, and the battery cell (2) is located between the coolers (402).

20. A vehicle, comprising a battery pack (1000) according to any one of claims 12 to 19.
